(19) Europäisches Patentamt
European Patent Office
Office européen des brevets

(11) EP 3 971 330 A1

(12) EUROPEAN PATENT APPLICATION
published in accordance with Art. 153(4) EPC

(43) Date of publication:
23.03.2022 Bulletin 2022/12

(21) Application number: 20806706.6

(22) Date of filing: 13.05.2020

(51) International Patent Classification (IPC):
D01F 6/04 (2006.01)          A01K 91/00 (2006.01)
D04C 1/02 (2006.01)          D04C 1/12 (2006.01)
D07B 1/02 (2006.01)

(52) Cooperative Patent Classification (CPC):
A01K 91/00; D01F 6/04; D04C 1/02; D04C 1/12;
D07B 1/02

(86) International application number:
PCT/JP2020/019078

(87) International publication number:
WO 2020/230809 (19.11.2020 Gazette 2020/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 14.05.2019   JP 2019091508
14.05.2019   JP 2019091509
29.10.2019   JP 2019195992

(71) Applicant: TOYOBO CO., LTD.
Osaka-shi
Osaka 530-8230 (JP)

(72) Inventors:
• FURUTA, Akihisa
Otsu-shi, Shiga 520-0292 (JP)
• FUKUSHIMA, Yasunori
Otsu-shi, Shiga 520-0292 (JP)
• OKAMOTO, Tatsushi
Otsu-shi, Shiga 520-0292 (JP)

(74) Representative: Müller-Boré & Partner
Patentanwälte PartG mbB
Friedenheimer Brücke 21
80639 München (DE)

(54) **POLYETHYLENE FIBRE**

(57) Provided is a polyethylene fiber having outstanding anti-creep characteristics while having high strength. The present invention provides an ultra-high molecular weight polyethylene fiber including ethyl branches as side chains, characterized in that the ratio $\{(C_2H_5/1000C)/(\text{elongation stress})\}$ of the number of ethyl branches per 1,000 carbon atoms ($C_2H_5/1000C$) to the elongation stress of the polyethylene fiber (MPa) is 2 to 30 branches/1,000 carbon atoms/MPa.

EP 3 971 330 A1

**Description**

TECHNICAL FIELD

The present invention relates to a novel high-strength polyethylene fiber, which is industrially applicable to a wide range of fields, such as: highly functional textiles for various sportswear, bulletproof and protective wear, and protective gloves; various rope products such as tag ropes, mooring ropes, yacht ropes, and ropes for use in construction; various braided cord products such as fishing lines and blind cables; furthermore, chemical filters and battery separators or materials for shelters such as tents; and reinforcing fibers for composites for helmets and skis in sports and speaker cones.

BACKGROUND ART

A high-strength polyethylene fiber produced, for example, by using ultrahigh molecular weight polyethylene as a raw material in a so-called "gel spinning method" has been known as an ultra-drawn fiber having unconventionally high strength and high elastic modulus (for example, Patent Literature 1), and has been industrially utilized in a wide range of fields. Although the high-strength polyethylene fiber has extremely excellent high strength and high elastic modulus, a drawback caused by the raw material is required in the market to be improved. For example, ultrahigh molecular weight polyethylene as a raw material of the high-strength polyethylene fiber has an extremely simple primary structure and has no hydrogen bonds or the like among molecular chains, and slippage is likely to occur among molecular chains. Therefore, if a loaded state lasts for a long time period, so-called creep elongation in which the fiber is elongated is increased. As a result, its use in applications where a load is applied for a long time has been limited, for example, in the case of braids, twisted yarns, fishing lines, ropes, nets, and the like.

In order to overcome such a problem, for example, Patent Literature 2 and Patent Literature 3 suggest a polyethylene fiber having ethyl side chains or the like. However, an ethyl side chain or the like significantly hinders drawability. Therefore, the number of side chains is restricted in order to maintain high strength and productivity, and a high creep characteristic level required recently in the market has not been achieved.

Therefore, for example, Patent Literature 4 discloses an ultrahigh molecular weight polyethylene fiber having both creep life and strength characteristics enhanced. However, the characteristics are required to be further improved.

PRIOR ART DOCUMENT

PATENT LITERATURE

[PTL 1] Japanese Examined Patent Publication No. S60-47922
[PTL 2] Japanese Laid-Open Patent Publication No. H06-280111
[PTL 3] International Publication No. 2017/102618
[PTL 4] Japanese Patent No. 6069676

SUMMARY OF THE INVENTION

PROBLEMS TO BE SOLVED BY THE INVENTION

The present invention has been made in view of the problem of the conventional technique, and an object of the present invention is to provide a polyethylene fiber having high strength and simultaneously having extremely excellent creep resistance.

SOLUTIONS TO PROBLEMS

As a result of intensive study to solve the problem, the inventors of the present invention have achieved invention. The present invention has the following constitution.

[1] An ultrahigh molecular weight polyethylene fiber containing ethyl branches as side chains wherein,
the polyethylene fiber satisfies a ratio of the number of ethyl branches per 1000 carbon atoms ($C_2H_5$/1000C) to an elongation stress of the polyethylene fiber (MPa) {($C_2H_5$/1000C)/ (elongation stress)} of 2 to 30 ethyl branches per 1000 carbon atoms/MPa.

[2] The ultrahigh molecular weight polyethylene fiber according to [1], wherein the polyethylene fiber further satisfies all the requirements below in creep measurement at the measurement temperature of 70°C under a measurement load of 6.6 g/dtex:

a creep rate is not larger than $9.0 \times 10^{-8} sec^{-1}$;
an elongation is not larger than 2.7% when 24 hours have elapsed since start of the measurement;
an elongation is not larger than 5.0% when 96 hours have elapsed since start of the measurement; and
a time until an elongation reaches 3.0% is not less than 30 hours.

[3] The ultrahigh molecular weight polyethylene fiber according to [1] or [2], wherein the polyethylene fiber further satisfies below:
a number of ethyl branches per 1000 carbon atoms ($C_2H_5$/1000C) is larger than 1.1.
[4] The ultrahigh molecular weight polyethylene fiber according to any one of [1] to [3], wherein the polyethylene fiber further satisfies below:

a melting point peak temperature in a first temperature rising is not higher than 141°C, and
a heat amount is not larger than 134 J/g in a range from 70°C to 150°C in which the melting point peak temperature is reached in a second temperature rising,
wherein, the peak temperature in the first temperature rising and the heat amount in the second temperature rising are values obtained when, in the differential scanning calorimetry (DSC measurement), a temperature of the polyethylene fiber is increased from 30°C to 200°C at a rate of 10°C/min (first temperature rising) and the polyethylene fiber is retained at 200°C for five minutes, the temperature is thereafter reduced from 200°C to 30°C at a rate of 10°C/min and the polyethylene fiber is retained at 30°C for five minutes, and the temperature is thereafter increased from 30°C to 200°C at a rate of 10°C/min (second temperature rising).

[5] The ultrahigh molecular weight polyethylene fiber according to any one of [1] to [4], wherein the polyethylene fiber further satisfies below:
a tensile strength is not less than 20 cN/dtex.
[6] A braid, a twisted yarn, a fishing line, a rope, or a net wherein the braid, the twisted yarn, the fishing line, the rope, and the net contains the polyethylene fiber contains the ultrahigh molecular weight polyethylene fiber according to any one of [1] to [5].

ADVANTAGEOUS EFFECTS OF THE INVENTION

The polyethylene fiber of the present invention has high strength and simultaneously has excellent creep resistance, and can be thus used in a wide range of usage as braids, twisted yarns, fishing lines, ropes, nets, and the like.

BRIEF DESCRIPTION OF THE DRAWINGS

[FIG. 1] FIG. 1 shows a state in which a sample is set and an amount of creep is measured in creep measurement.
[FIG. 2] FIG. 2 shows a measurement state in the creep measurement.

DESCRIPTION OF EMBODIMENTS

The inventors of the present invention have made examination based on the structure disclosed in Patent Literature 4 in order to provide an ultrahigh molecular weight polyethylene fiber having high strength and extremely excellent creep resistance.
Specifically, Patent Literature 4 indicates that, in an ultrahigh molecular weight polyethylene fiber containing ethyl branches in which a ratio of the number of the ethyl branches per 1000 carbon atoms ($C_2H_5$/1000C) to an elongation stress ES of the polymer in the ultrahigh molecular weight polyethylene satisfies 1.00 to 3.00 mm²/N, the creep life satisfies at least 125 hours in a case where a 600 MPa load is applied at a temperature of 70°C. The "elongation stress of the polymer" represents a stress that is required for elongating a measurement sample obtained by compression-moulding of polymer into a specific shape, by 600%, for 10 minutes when a time until the measurement sample is elongated by 600% at a predetermined temperature (150°C) by pulling the measurement sample under various loads is measured. In Patent Literature 4, the elongation stress of polymer is measured based on ISO 11542-2A.
Furthermore, in Patent Literature 4, polyethylene in which the number of ethyl branches per 1000 carbon atoms is preferably 0.40 to 1.10 is used, and, in Examples, polyethylene in which the number of the ethyl branches is 0.69 or 1.05 is used.

However, according to the result of examination by the inventors of the present invention, in a case where a ratio of the number of ethyl branches per 1000 carbon atoms to an elongation stress of the polyethylene fiber is controlled to be 2 to 30 ethyl branches per 1000 carbon atoms/MPa as in the present invention, and be larger than the upper limit in Patent Literature 4, the strength and the creep resistance (particularly, strength) are found to be further enhanced unexpectedly as compared with those in Patent Literature 4. The inventors of the present invention have found that, in order to achieve this, the number of ethyl branches per 1000 carbon atoms is to be increased and controlled to be preferably larger than 1.1, which is larger than that in Patent Literature 4, to complete the present invention.

In the examination of the elongation stress, the following matters have been changed in the present invention.

Firstly, in the present invention, since the elongation stress was not able to be measured in accordance with the ISO standard as in Patent Literature 4, the elongation stress was measured by a method similar to that in the ISO standard, but the following two points are changed. The sample fixation was changed from a clamp to a chuck, and the measurement environment was changed from a liquid phase such as silicone oil or the like to a gas phase. The details will be described below in Examples.

Furthermore, in the present invention, an elongation stress of the polyethylene fiber itself instead of an elongation stress of the polymer as in Patent Literature 4 was measured in order to more assuredly obtain the characteristic of the fiber. According to the result of the examination by the inventors of the present invention, since an elongation stress of the polymer has a preferable correlation with an intrinsic viscosity of the fiber, the structure {ratio $(C_2H_5/1000C)$/(elongation stress of polymer)} in Patent Literature 4 for polymer was able to be associated with the structure {ratio $(C_2H_5/1000C)$/(elongation stress of fiber)} of the present invention for fiber.

In the polyethylene fiber that satisfies the above-described characteristics, deformation is extremely small even in a state where the polyethylene fiber is used as ropes, nets, and the like under harsh environments such as outdoor environments in a strained state for a long time period, lifespan of products is significantly elongated, and the polyethylene fiber contributes to economic efficiency and environmental preservation.

The structure of the present invention will be described below in detail.

[Polyethylene fiber]

As described above, the polyethylene fiber of the present invention is an ultrahigh molecular weight polyethylene fiber that contains ethyl branches as side chains. In the polyethylene fiber, a ratio {(the number of ethyl branches)/(elongation stress); unit: the number of ethyl branches per 1000 carbon atoms/MPa. Hereinafter, the ratio may be simply abbreviated as ratio of the number of ethyl branches to elongation stress} of the number of ethyl branches per 1000 carbon atoms $(C_2H_5/1000C)$ to the elongation stress of the polyethylene fiber, is 2 to 30 ethyl branches per 1000 carbon atoms/MPa. The above-described ratio is set for assuredly obtaining high strength and creep resistance as desired. In a case where the ratio is less than 2 ethyl branches per 1000 carbon atoms/MPa, creep resistance is lowered. Meanwhile, in a case where the ratio is larger than 30 ethyl branches per 1000 carbon atoms/MPa, tensile strength is reduced.

The ratio is preferably 2.5 to 25 ethyl branches per 1000 carbon atoms/MPa, and more preferably 3.0 to 20 ethyl branches per 1000 carbon atoms/MPa.

The ratio can be controlled by, for example, an intrinsic viscosity of a raw polyethylene material. For example, in a case where a raw polyethylene material having a very low intrinsic viscosity is used, an intrinsic viscosity as fiber is reduced, and the elongation stress is also reduced, resulting in increase of the above-described ratio (see comparative example 3 in Table 1 described below).

"The number of ethyl branches per 1000 carbon atoms $(C_2H_5/1000C)$; hereinafter, may be simply referred to as the number of ethyl branches" in the above-described ratio is preferably larger than 1.1. Such polyethylene fiber can effectively prevent slippage of polyethylene molecules, and thus exhibits excellent creep resistance.

In Patent Literature 4 described above, the number of butyl branches in addition to the number of ethyl branches is also defined. However, according to the results of the examination by the inventors of the present invention, processing of a polyethylene fiber having the defined number of butyl branches is difficult. Therefore, in the present invention, only the number of ethyl branches is defined.

The number of ethyl branches (unit: the number of ethyl branches/1000 carbon atoms) is preferably larger than 1.1, more preferably larger than 1.10, even more preferably not less than 1.3, and, furthermore, more preferably not less than 1.5. The upper limit thereof is not particularly limited from the viewpoint of creep resistance. However, increase of the number of ethyl branches leads to reduction of drawability, so that high-strength fiber cannot be obtained as desired. Therefore, the upper limit thereof is preferably not larger than 20, more preferably not larger than 15, and even more preferably not larger than 10.

In the description herein, the number of ethyl branches represents the number of ethyl branches contained in the polyethylene fiber.

The polyethylene fiber of the present invention has excellent creep resistance. In the description herein, "having excellent creep resistance" means that all the requirements (i) to (iv) described below are satisfied in creep measurement at the measurement temperature of 70°C under a measurement load of 6.6 g/dtex.

(i) The creep rate is not larger than $9.0 \times 10^{-8} \text{sec}^{-1}$,
(ii) the elongation is not larger than 2.7% when 24 hours have elapsed since start of the measurement,
(iii) the elongation is not larger than 5.0% when 96 hours have elapsed since start of the measurement, and
(iv) a time until an elongation reaches 3.0% is not less than 30 hours.

In the polyethylene fiber of the present invention, a tensile strength is preferably not less than 20 cN/dtex. Such polyethylene fiber has high strength and high elastic modulus, and can be thus widely used in the industrial field. The tensile strength is more preferably not less than 25 cN/dtex, and the tensile strength is even more preferably not less than 30 cN/dtex. The upper limit of the tensile strength is not particularly limited. However, the polyethylene fiber having a tensile strength larger than 60 cN/dtex is difficult to produce from the standpoint of technique and industrial production. Hereinafter, the tensile strength may be simply abbreviated as strength. An initial elastic modulus is preferably not less than 500 cN/dtex. The initial elastic modulus is more preferably not less than 600 cN/dtex, and the initial elastic modulus is even more preferably not less than 700 cN/dtex. The upper limit of the initial elastic modulus is not particularly limited. However, the initial elastic modulus of larger than 2000 cN/dtex is not preferable because, in this case, alignment of braids and ropes is difficult in moulding of the braids and ropes, and breakage of a single filament may be caused. An elongation at break is preferably not less than 3.0%. The elongation at break is more preferably not less than 3.2%, and the elongation at break is even more preferably not less than 3.4%. The upper limit of the elongation at break is not particularly limited. However, the elongation at break is preferably not larger than 7.0%. The elongation at break of less than 3.0% is not preferable because, in this case, alignment of braids and ropes is difficult in moulding of the braids and ropes, and breakage of a single filament may be caused. In a case where the elongation at break is larger than 7.0%, the polyethylene fiber having the tensile strength in the above-described range is difficult to obtain from the standpoint of technique and industrial production.

The polyethylene fiber of the present invention has excellent strength and creep resistance, and is thus preferably used in usage under harsh environments in a long-term strained state, for example, usage as braids, twisted yarns, fishing lines, ropes, nets, and the like.

In the polyethylene fiber, a peak temperature of a melting point measured for 2.0 mg of a sample at a temperature rising rate (first temperature rising) of 10°C/min. from 30°C to 200°C by differential scanning calorimetry (DSC measurement) is not higher than 141°C. Such polyethylene fiber has excellent drawability and can have sufficiently high strength and elastic modulus even when alkyl side chains are contained. The temperature at the melting point peak in the first temperature rising is considered to exhibit contribution as steric hindrance of alkyl side chains in the polyethylene fiber. That is, the alkyl side chains act as steric hindrance, and are considered to cause breakage of a crystal structure at the portion, reduce the crystal melting temperature, simultaneously prevent slippage of polyethylene molecules, and exhibit excellent creep characteristics. The melting point peak temperature in the first temperature rising is preferably not lower than 125°C. In a case where the melting point peak temperature is lower than 125°C, although drawability is enhanced, the molecular weight is low or crystallization is not sufficient, so that sufficient strength and elastic modulus may not be obtained. The melting point peak temperature is more preferably not lower than 130°C and even more preferably not lower than 132°C.

Furthermore, in the polyethylene fiber, a heat amount is not larger than 134 J/g in a range from 70°C to 150°C in which the melting point peak temperature is reached in a second temperature rising. The heat amount in the second temperature rising is considered to reflect the number of alkyl side chains in a raw polyethylene material.

The peak temperature in the first temperature rising and the heat amount in the second temperature rising in the differential scanning calorimetry (DSC measurement) are specifically values obtained when, in the differential scanning calorimetry (DSC measurement), a temperature is increased from 30°C to 200°C at a rate of 10°C/min. (first temperature rising) and the polyethylene fiber is retained at 200°C for five minutes, the temperature is thereafter reduced from 200°C to 30°C at a rate of 10°C/min. and the polyethylene fiber is retained at 30°C for five minutes, and the temperature is thereafter increased from 30°C to 200°C at a rate of 10°C/min. (second temperature rising).

[Raw polyethylene material]

As described above, in the polyethylene fiber of the present invention, the number of ethyl branches is large and preferably larger than 1.1 (unit: the number of ethyl branches/1000 carbon atoms). Thus, in a case where the number of ethyl branches is large, a ratio of the number of ethyl branches to the elongation stress of the polyethylene fiber is controlled to be in a range of 2 to 30 ethyl branches/MPa. As a result, the polyethylene fiber having excellent tensile strength and creep resistance is obtained. Patent Literature 4 described above does not disclose the feature of the present invention in which the strength and the creep resistance are enhanced by increasing the number of ethyl branches, in any way.

The raw polyethylene material used in the present invention may be any material as long as the number of ethyl branches in the polyethylene fiber is controlled to be in the above-described range. For example, use of the following raw polyethylene materials is recommended. As described below in Examples, it has been found that any type of the raw polyethylene materials that satisfy the number of ethyl branches of preferably larger than 1.1 (unit: the number of ethyl branches/1000 carbon atoms) allows the desired characteristics to be obtained.

(i) raw polyethylene material (blended) that contains ultrahigh molecular weight polyethylene obtained by polymerization of ethylene in the presence of a Ziegler catalyst and ultrahigh molecular weight polyethylene obtained by polymerization of ethylene in the presence of a metallocene catalyst.
(ii) raw polyethylene material (blended) that contains two or more kinds of ultrahigh molecular weight polyethylenes having different average molecular weights or different numbers of ethyl branches.
(iii) raw polyethylene material (not blended) that contains a single kind of ultrahigh molecular weight polyethylene obtained by polymerization of ethylene in the presence of a Ziegler catalyst or a single kind of ultrahigh molecular weight polyethylene obtained by polymerization of ethylene in the presence of a metallocene catalyst.

In the above-described (i) and (iii), the ethyl branches may be contained in one or both of the ultrahigh molecular weight polyethylene obtained by polymerization of ethylene in the presence of a Ziegler catalyst and the ultrahigh molecular weight polyethylene obtained by polymerization of ethylene in the presence of a metallocene catalyst.

In the above-described (ii), two or more plural kinds of raw polyethylene materials having different average molecular weights, different molecular weight distributions, or different numbers of ethyl branches are blended and used, and a polyethylene fiber having excellent drawability, high strength, and high elastic modulus is thus assured (see examples 2 to 7 in Table 1 described below).

The "polyethylenes having different average molecular weights" indicate that a difference in intrinsic viscosity between polyethylene (hereinafter, referred to as "H polyethylene") in which the average molecular weight is large, and polyethylene (hereinafter, referred to as "L polyethylene") in which the average molecular weight is small is preferably not less than about 2.0 dL/g and more preferably not less than 3.0 dL/g. According to the result of the examination by the inventors of the present invention, it has been found that the L polyethylene contributes to drawability, the H polyethylene contributes to high strength, the L polyethylene acts so as to obtain sufficient drawability regardless of multiple alkyl side chains (ethyl branches in the present invention), and the potential of the H polyethylene for enhancing the strength can be sufficiently exhibited.

The difference in intrinsic viscosity between the H polyethylene and the L polyethylene is preferably not larger than 15.0 dL/g and more preferably not larger than 10.0 dL/g. This is because, as described above, the drawability is enhanced in a case where the average molecular weight is small, whereas the fiber having high strength tends to be difficult to obtain in a case where a blended amount of the L polyethylene is large.

In the above-described (i) or (ii), the number of kinds of polyethylenes to be blended is not particularly limited, and, for example, two, three, or four kinds of polyethylenes may be blended. However, two or more plural kinds (preferably, two kinds) of raw polyethylene materials having different average molecular weights, different molecular weight distributions, or different numbers of ethyl branches as described above are preferably blended in consideration of, for example, assuring mechanical characteristics such as high strength and creep resistance as desired, and enhancing mouldability.

Meanwhile, in the above-described (iii), a single kind of ultrahigh molecular weight polyethylene obtained in the presence of a Ziegler catalyst or a metallocene catalyst is used instead of a plurality of raw polyethylene materials being blended as in the above-described (i) or (ii) (see Example 1 in Table 1 described below). According to the result of experimentation by the inventors of the present invention, a polyethylene fiber having creep resistance and high strength as desired was able to be also obtained in the non-blended manner of the above-described (iii). However, it has been found that a draw ratio can be further increased from that for a first drawn filament described below and the tensile strength of the obtained polyethylene fiber is further enhanced in the blended manner of the above-described (i) or (ii). Patent Literature 4 described above does not disclose use of the raw polyethylene materials of the above-described (i) to (iii) at all.

Each manner will be described below in detail.

Regarding (i)

As the raw polyethylene material used in the present invention, as in the above-described (i), ultrahigh molecular weight polyethylene (hereinafter, referred to as "Ziegler polyethylene") obtained by polymerization of ethylene in the presence of a Ziegler catalyst and ultrahigh molecular weight polyethylene (hereinafter, referred to as "metallocene polyethylene") obtained by polymerization of ethylene in the presence of a metallocene catalyst may be blended and used. In this case, it is recommended that the Ziegler polyethylene be used as polyethylene (H polyethylene) in which the average molecular weight is large, and the metallocene polyethylene be used as polyethylene (L polyethylene) in which the average molecular weight is small. This is because the Ziegler polyethylene has a wide molecular weight distribution, and a high molecular weight component functions as the H polyethylene, that is, contributes to high strength, whereas the metallocene polyethylene has a narrower molecular weight distribution than the Ziegler polyethylene, and a low molecular weight component functions as the L polyethylene, that is, contributes to enhancement of drawability. It has been found that, as a result, the polyethylene fiber having excellent drawability, high strength, and high elastic modulus is obtained.

In order to mainly achieve drawability and high strength, the Ziegler polyethylene preferably has no ethyl branches, and only the metallocene polyethylene preferably has ethyl branches. This is preferable because it is known that the branches inhibit drawability and make it difficult to obtain high strength, and drawability becomes excellent in a case where the metallocene polyethylene has ethyl branches, by the influences of the average molecular weight and the molecular weight distribution as described above.

A blending ratio between the H polyethylene and the L polyethylene may be adjusted as appropriate so as to obtain the polyethylene fiber of the present invention in consideration of difference in the number of ethyl side chains and intrinsic viscosity between the H and the L polyethylenes. However, for example, the blending ratio between the H polyethylene and the L polyethylene may be preferably H polyethylene:L polyethylene (weight ratio)=10 to 90:90 to 10. For example, the blending ratio is more preferably 30 to 70:70 to 30 from the viewpoint of uniformly blending both the polymers.

Regarding (ii)

The raw polyethylene material used in the present invention may be two or more kinds of ultrahigh molecular weight polyethylenes, having different average molecular weights, obtained by polymerization of ethylene in the presence of a Ziegler catalyst or a metallocene catalyst, as in the above-described (ii). The fiber formed of such ultrahigh molecular weight polyethylenes also has excellent drawability and tensile strength.

In the above-described (ii), ethylene is preferably polymerized mainly in the presence of a Ziegler catalyst. As described above, in polyethylene obtained in the presence of a Ziegler catalyst, the molecular weight distribution is large, and the molecular weights overlap in a large range among polyethylenes having different average molecular weights, and the continuity in the molecular weight distribution is assured, so that the processing conditions in which the raw material is processed into the fiber are assumed to be wide.

Regarding (iii)

The raw polyethylene material used in the present invention may be formed of a single kind of ultrahigh molecular weight polyethylene obtained by polymerization of ethylene in the presence of a Ziegler catalyst or a metallocene catalyst as in the above-described (iii) [non-blended unlike the above-described (i), (ii)]. The fiber formed of such ultrahigh molecular weight polyethylene also has excellent drawability and strength.

However, ethylene is preferably polymerized mainly in the presence of a Ziegler catalyst for the same reason as for the above-described (ii).

[Method for producing polyethylene fiber]

Next, a preferable method for producing the polyethylene fiber of the present invention will be described.

[Raw polyethylene material]

For the polyethylene fiber of the present invention, ultrahigh molecular weight polyethylene is preferably used as the raw polyethylene material.

In the present invention, the index of the "ultrahigh molecular weight" is represented by intrinsic viscosity $[\eta]$.

Specifically, the intrinsic viscosity $[\eta]$ of the raw polyethylene material is not less than 5.0 dL/g and not larger than 40.0 dL/g, more preferably not less than 8.0 dL/g and not larger than 35.0 dL/g, even more preferably not less than 10.0 dL/g and not larger than 30.0 dL/g, and, furthermore, more preferably not less than 12.0 dL/g and not larger than 30.0 dL/g. In a case where the intrinsic viscosity is less than 5.0 dL/g, the tensile strength of the final polyethylene fiber is low, and the polyethylene fiber having high strength (for example, the tensile strength is not less than 20 cN/dtex) as desired may not be obtained. Meanwhile, in a case where the intrinsic viscosity is larger than 40.0 dL/g, drawability is reduced, and high strength fiber may not be obtained as desired.

The raw polyethylene material contains ethyl groups (ethyl branches) as the side chains, and the number of the ethyl branches is preferably in the range described above.

In a case where two or more kinds of raw polyethylene materials are used, one or both of the raw polyethylene materials may have ethyl groups as the side chains.

The polyethylene fiber of the present invention is preferably produced by a gel spinning method. Specifically, the production method preferably includes; a dissolving step of dissolving a raw polyethylene material in a solvent, to form a polyethylene solution; a spinning step of discharging the polyethylene solution from a nozzle at a temperature that is not lower than a melting point of the raw polyethylene material, and cooling a discharged filament with a coolant; a drying step of eliminating the solvent from the discharged non-drawn filament; a drawing step of drawing the filament; and a taking-up step of taking up the drawn filament obtained in the drawing. Each step will be described below.

[Dissolving step]

Firstly, it is recommended that a high-molecular weight raw polyethylene material is dissolved to form a polyethylene solution. Examples of the solvent for the raw polyethylene material include volatile organic solvents such as decalin and tetralin, and nonvolatile solvents such as paraffin. The concentration of polyethylene in the polyethylene solution is preferably not less than 0.5 mass % and not larger than 40 mass %, more preferably not less than 2.0 mass % and not larger than 30 mass %, and even more preferably not less than 3.0 mass % and not larger than 20 mass %. In a case where the concentration of polyethylene is less than 0.5 mass %, production efficiency is substantially degraded. Meanwhile, in a case where the concentration of polyethylene is larger than 40 mass %, discharge from the nozzle described below in the gel spinning method may become difficult due to the very large molecular weight.

[Spinning step]

The above-descried polyethylene solution is extruded at a temperature that is not lower than the melting point of the raw polyethylene material (preferably, a temperature that is higher than the melting point by 10°C or more) by using an extruder or the like, and is supplied to a spinning nozzle by using a metering device. Thereafter, the polyethylene solution is discharged through the spinning nozzle having a plurality of orifices aligned with each other, to form filaments (gel filamentous material). A temperature before a spinneret is set to be lower than a thermal decomposition temperature of the raw polyethylene material. The extrusion is performed at a temperature that is higher than the melting point of the raw polyethylene material by 10°C or more.

Subsequently, the discharged gel filamentous material is taken while being cooled with a cooling medium. Examples of the cooling method include a dry quenching method in which inert gas such as nitrogen or air is used and a dry-wet quenching method in which miscible liquid or non-miscible liquid such as water is used.

[Drying and drawing step]

The filamentous material (non-drawn filament) taken in the above-described spinning step is continuously or temporarily taken up, and then dried and drawn. The drying step is performed in order to eliminate the solvent. The solvent may be eliminated by using a heating roller or in a heating medium atmosphere in the case of a volatile solvent. Examples of the heating medium include air, inert gas such as nitrogen, water vapor, and liquid medium. Alternatively, a nonvolatile solvent may be used. In this case, for example, a method in which extraction is performed by using an extractant or the like is used. Examples of the extractant include chloroform, benzene, heptane, nonane, decane, ethanol, and higher alcohol.

In the succeeding drawing step, the non-drawn filament in the heated state is preferably drawn such that the filament speed at the outlet is several times the filament speed at the inlet in the drawing step. The drawing may be performed once or divisionally performed a plurality of times. However, the number of times of the drawing is preferably not less than one and not larger than three. The drawing step may be performed in a heating medium atmosphere or by using a heating roller. Examples of the heating medium include air, inert gas such as nitrogen, water vapor, and liquid medium.

It has been found that, in a case where the temperature for the drawing is 1.0 to 10.0°C lower than that for a raw polyethylene material containing no ethyl branches, drawability is enhanced and the strength of the fiber is finally enhanced. This may be mainly because the melting point becomes low in a case where the side chain of the raw polyethylene material contains ethyl branches. Specifically, the drawing is preferably performed at a temperature of, for example, 130 to 150°C depending on the number of ethyl branches in the polyethylene fiber. The drawing is more preferably performed at a temperature of 132 to 148°C.

This application claims priority to Japanese Patent Application No. 2019-091508 and Japanese Patent Application No. 2019-091509 each filed on May 14, 2019, and Japanese Patent Application No. 2019-195992 filed on October 29, 2019. The entire disclosures of Japanese Patent Application No. 2019-091508 and Japanese Patent Application No. 2019-091509 each filed on May 14, 2019, and Japanese Patent Application No. 2019-195992 filed on October 29, 2019 are incorporated by reference herein.

Examples

The following will describe the present invention specifically by means of examples. However, the present invention is not limited by the following examples, the present invention can be implemented by making such modifications as to conform to the gist of the present invention which have been described above and will be described below, and these modifications are included in the technical scope of the present invention. In the following description, unless otherwise specified, "part" represents "parts by mass", and "%" represents "mass %".

Various characteristics of the polyethylene fibers in the following examples were measured as follows and evaluated according to the following criteria.

(1) Intrinsic viscosity

Specific viscosities of various diluted solutions were measured in decalin at 135°C by using a Ubbelohde capillary viscometer, the viscosities were plotted against concentrations, and an intrinsic viscosity was determined based on extrapolated points to an originating point of a straight line obtained by least squares approximation. An antioxidant ("YOSHINOX (registered trademark) BHT manufactured by API Corporation") was added by 1 mass% to a sample, and stirred and dissolved at 135°C for four hours to prepare the measurement solution.

(2) The number of ethyl branches

Each sample of 250 mg was taken out and dissolved in o-dichlorobenzene+p-dichlorobenzene-$d_4$ (7 vol%+3 vol%) at 145°C. A C-NMR was measured at 120°C and the number of ethyl branches was estimated in the following manner based on the obtained $^{13}$C-NMR spectrum.

In a case where the ethylene chain peak of polyethylene is 30 ppm, the peak derived from the ethyl side chain is detected near 34 ppm. When the peak integration value at 34 ppm is A in the case of the integration value of the ethylene chain peak being 1000, the number of the ethyl side chains can be calculated as A/2 (the number of ethyl side chains/1000C).

(3) Elongation stress

In the present invention, the press-moulding and elongation stress test was performed as follows, almost in accordance with "JIS K 6936-2:2007, Plastics -ultra-high-molecular-weight polyethylene (PE-UHMW) moulding and extrusion materials- Part 2: Preparation of test specimens and determination of properties" Annex A (normative) Method for determining the elongating stress of the ultra-high-molecular-weight polyethylene moulding material, which is similar to the above-described ISO standard, to measure the elongation stress of the polyethylene fiber. As described above, the JIS K 6936-2:2007 method and the measurement method of the present invention were different, the sample fixation was changed from a clamp to a chuck, and the measurement environment was changed from a liquid phase such as silicone oil or the like to a gas phase.

Specifically, a sample was firstly washed with acetone, and was thereafter press-moulded under the following conditions, to produce a sheet-shaped test specimen.

Moulding temperature: 210°C, preheating conditions: 5 MPa for 15 minutes, full moulding conditions: 10 MPa for 30 minutes, average cooling rate: 15°C/min., demoulding temperature: not higher than 40°C, testing machine used: electrothermal pressing machine manufactured by Otake Kikai Kogyo K.K.

The elongation stress was measured by using the obtained test specimen under the following conditions.

The test specimens were cut from the press-moulded product (for the shape of the test specimen, see FIG. 3 test specimen in Annex A of JIS K 6936-2:2007), the number of the test specimens was six, the gripping distance was 20 mm, the test temperature was 150°C±2°C (in gas phase), a testing machine used was the precision universal tester Autograph AG-I manufactured by SHIMADZU CORPORATION with 100 kN, a testing machine capacity as a load cell was 1 kN, and load (the unit was MPa) was applied as test load by six kinds of different weights such that a time required for 600% elongation of parallel gripped portions of the test specimens was in a range of 1 to 20 minutes. According to the result from six points of the test specimens, the horizontal axis was set to represent each measurement time (the unit was minute), and the vertical axis was set to represent each stress (the unit was MPa), and an estimated tensile stress with which 600% elongation was reached for ten minutes was calculated, and the estimated tensile stress obtained in the calculation was set as the elongation stress (the unit was MPa).

(4) Fineness

Samples each having a size of 10 m were cut at five different positions, and the weight of each sample was measured, to obtain fineness (dtex) by using the average of the values at the five positions.

(5) Tensile strength, elongation at break, and initial elastic modulus

These were measured in accordance with JIS L1013 8.5.1.

Specifically, a strain-stress curve was obtained, under the conditions that a length of a sample was 200 mm (length between chucks), an elongation speed was 100 mm/min., an ambient temperature was 20°C, and a relative humidity was 65%, by using "TENSILON" manufactured by ORIENTEC CORPORATION. A tensile strength (cN/dtex) was calculated from a stress at the breaking point on the obtained curve, and an elongation at break was calculated from the elongation.

An elastic modulus (cN/dtex) was calculated from the tangent line providing a maximum gradient on the obtained curve in the vicinity of the originating point.

The number of times of the measurement was 10 and an average value was obtained. An initial load applied to the sample in the measurement was 1/10 of a mass (g) per 10000 m of the sample.

(6) Differential scanning calorimetry (DSC measurement)

The "DSCQ100" manufactured by TA Instruments was used for the measurement. A sample was cut so as to be 3 to 5 mm. About 2 mg of the sample was charged and enclosed in an aluminium pan. A similar vacant aluminium pan was used as a reference. In nitrogen gas, the temperature was increased from 30°C to 200°C at a temperature rising rate of 10°C/min. (first temperature rising) and the sample was retained at 200°C for five minutes, the temperature was reduced from 200 to 30°C at a rate of 10°C/min. and the sample was retained at 30°C for five minutes, and the temperature was increased from 30°C to 200°C at a rate of 10°C/min. (second temperature rising), to obtain a temperature rising DSC curve. An endothermic peak top temperature in the first temperature rising was obtained from the temperature rising DSC curve as a melting point peak temperature in the first temperature rising. A melting heat amount [unit: J/g] in a range from 70°C to 150°C in the second temperature rising was obtained as a heat amount in the second temperature rising.

(7) Creep resistance

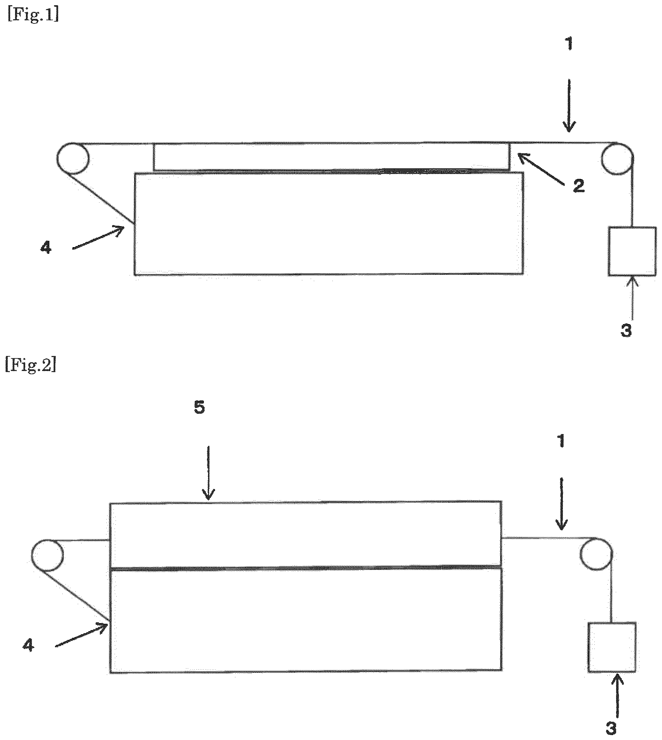

As shown in FIG. 1 and FIG. 2, one of free ends of a sample was fixed, a predetermined load was applied to the other of the free ends, a portion of the sample between both the ends was heated to a predetermined temperature, and a change amount of the sample was read at each measurement time to measure creep. A specific measurement method was as follows.

Heating to a predetermined temperature (70°C in this example) was performed, and a metal plate (length of 70.0 cm, the surface was subjected to mirror-finishing) capable of maintaining the temperature was prepared.

The sample was not twisted, and was placed on the metal plate so as to come into contact with the metal plate.

As shown in FIG. 1, one of the free ends of the sample was fixed at a portion protruding from the metal plate, and an initial load (load of 0.2 g/dtex) was applied to the other of the free ends at a portion protruding from the metal end.

Two portions of the sample on the metal plate were marked such that a sample length corresponding to a distance between the two portions was 50.0 cm, and the initial load was then removed and a predetermined load (6.6 g/dtex) was attached. Subsequently, as shown in FIG. 2, a lid was closed from the upper side for retaining heat so as not to be in contact with the sample on the metal plate (the lid and the sample were not in contact with each other), and measurement of creep was started. The lid was opened every one hour after the start of the measurement until five hours, and, after that, the lid was opened every 12 hours, and at time points of 24 hours and 96 hours, and a distance between the firstly marked portions was read. Specifically, the measurement times were one hour, two hours, three hours, four hours, five hours, 17 hours, (5 hours+12 hours), 24 hours, 29 hours (17 hours+12 hours), 41 hours (29 hours+12 hours), 53 hours (41 hours+12 hours), 65 hours (53 hours+12 hours), 77 hours (65 hours+12 hours), 89 hours (77 hours+12 hours), 96 hours, 101 hours (89 hours+12 hours), 113 hours (101 hours+12 hours), and 125 hours (113 hours+12 hours) after the start of the measurement. After that, the measurement was performed every +12 hours.

The measurement of the creep was continued until the sample was broken.

An elongation $\varepsilon_i$ (mm) of the sample at a time t is a difference between a distance L(t) between portions of the sample marked at the time t and a distance Lo (50.0 cm) between the firstly marked portions of the sample, and the elongation (strain) $\varepsilon_i(t)$(%) is represented as follows.

$$\varepsilon_i(t)(\%) = (L_{(t)} - L_0) \times 100 / L_0$$

Furthermore, a creep rate $\tau$ (1/second) was defined as change of a length, of the sample, measured every one second, and the creep rate $\tau_i$ at each measurement time is represented as follows.

$$\tau_i(1/\text{second}) = (\varepsilon_i - \varepsilon_{i-1}) / (t_i - t_{i-1}) \times 1/100$$

As described above, a distance between the marked portions was measured from the start of the measurement until the sample was broken, and the creep rate $\tau_i$ at each measurement time was plotted on a logarithmic scale, and the minimal value was set as the creep rate of the measured sample.

A read time immediately before a time read when the breakage of the sample was observed was set as creep life of the measured sample. That is, the time at which the final sample length was able to be read was set as the creep life. In this example, in a case where the creep life measured in this manner became not less than 509 hours, the creep life was determined as being substantially longer than that of a conventional technique, and the measurement was no longer performed. In this case, the creep life was indicated as "not less than 509 hours".

(Example 1)

In this example, a raw polyethylene material as the above-described (iii) formed of a single kind of ultrahigh molecular weight polyethylene obtained by polymerization of ethylene in the presence of a Ziegler catalyst was used to produce a polyethylene fiber.

Specifically, ultrahigh molecular weight polyethylene (A) obtained by polymerization using a Ziegler-based catalyst so as to have an intrinsic viscosity of 15.6 dL/g and 3.4 ethyl side chains per 1000 carbon atoms, and decahydronaphthalene (decalin) as a solvent were mixed at the ultrahigh molecular weight polyethylene (A):decalin=9:91 (weight ratio), to form slurry liquid.

The slurry liquid obtained in this manner was melted by a twin-screw extruder having a mixing and transport unit, and the obtained polyethylene solution was discharged from a spinneret at the spinneret surface temperature of 175°C and at a single hole discharge rate of 3.0 g/min. The number of orifices formed in the spinneret was 16, and the orifice diameter was 0.8 mm.

Subsequently, while the discharged filamentous material being taken was taken up at a speed of 80.0 m/min. by using a 20°C cooling water bath such that a distance between the nozzle and the water surface was 1.5 cm, the filament-like material was cooled, to obtain a non-drawn multifilament (gel filament) formed of 16 monofilaments. Continuously, the non-drawn multifilament was drawn 1.5-fold while being dried in 110°C hot air, and, furthermore, continuously drawn 2.7-fold in 140°C hot air, to obtain a first drawn filament for which the total draw ratio was 4.0.

The obtained first drawn filament was further drawn 2.3-fold in 141°C hot air, and the drawn multifilament was immediately taken up in the drawn state.

In the drawn multifilament obtained in this manner, the number of ethyl branches was 3.4 ethyl branches/1000C, the elongation stress was 0.24 MPa, and a ratio of the number of ethyl branches to the elongation stress was 14.2 ethyl branches/MPa.

As the physical properties of the drawn multifilament, the fineness was 62 dtex, the tensile strength was 33 cN/dtex, the initial elastic modulus was 796 cN/dtex, and the elongation at break was 4.7%. As the result of the creep measurement, the creep rate was $7.5 \times 10^{-10}$ sec$^{-1}$, the elongation was 1.5% when 24 hours have elapsed since the start of the measurement, the elongation was 1.5% when 96 hours have elapsed since the start of the measurement, a time until the elongation reached 3.0% was not less than 509 hours (the elongation at the time point of 509 hours was 1.7%), and the creep life was not less than 509 hours. As the result of the DSC measurement of the fiber sample, the melting point peak temperature in the first temperature rising was 136°C, and the heat amount in the second temperature rising was 124 J/g.

(Example 2)

In this example, a raw polyethylene material as the above-described (ii) containing two or more kinds of ultrahigh molecular weight polyethylenes which were obtained by polymerization of ethylene in the presence of a Ziegler catalyst and had different average molecular weights was used to produce a polyethylene fiber.

Specifically, a drawn multifilament was obtained in the same manner as in Example 1 except that the ultrahigh molecular weight polyethylene (A) in Example 1 having an intrinsic viscosity of 15.6 dL/g and 3.4 ethyl side chains per 1000 carbon atoms, ultrahigh molecular weight polyethylene (B) having an intrinsic viscosity of 20.0 dL/g and no ethyl side chains, and decahydronaphthalene (decalin) were mixed at the ultrahigh molecular weight polyethylene (A):the ultrahigh molecular weight polyethylene (B):decalin=5.3:3.7:91.0 (weight ratio) to obtain slurry liquid, and the first drawn filament was obtained by 2.8-fold drawing in 145°C hot air.

In the drawn multifilament obtained in this manner, the number of ethyl branches was 2.0 ethyl branches/1000C, the elongation stress was 0.26 MPa, and a ratio of the number of ethyl branches to the elongation stress was 7.7 ethyl branches/MPa.

As the physical properties of the drawn multifilament, the fineness was 47 dtex, the tensile strength was 36 cN/dtex, the initial elastic modulus was 1094 cN/dtex, and the elongation at break was 4.1%. As the result of the creep measurement, the creep rate was $8.7 \times 10^{-9}$ sec$^{-1}$, the elongation was 1.5% when 24 hours have elapsed since the start of the measurement, the elongation was 2.2% when 96 hours have elapsed since the start of the measurement, a time until the elongation reached 3.0% was 173 hours, and the creep life was not less than 509 hours. As results of the DSC measurement of the fiber sample, the melting point peak temperature in the first temperature rising was 139°C, and the heat amount in the second temperature rising was 123 J/g.

(Example 3)

In this example, a raw polyethylene material as the above-described (ii) containing two or more kinds of ultrahigh molecular weight polyethylenes which were obtained by polymerization of ethylene in the presence of a Ziegler catalyst and had different average molecular weights was used to produce a polyethylene fiber.

Specifically, a drawn multifilament was obtained in the same manner as in Example 1 except that the ultrahigh molecular weight polyethylene (C) having an intrinsic viscosity of 17.0 dL/g and using a Ziegler catalyst for polymerization, ultrahigh molecular weight polyethylene (B) having an intrinsic viscosity of 20.0 dL/g and no ethyl side chains using a Ziegler catalyst for polymerization, and decahydronaphthalene (decalin) were mixed at the ultrahigh molecular weight polyethylene (C):the ultrahigh molecular weight polyethylene (B):decalin=6.8:2.2:91.0 (weight ratio) to obtain slurry liquid, and the first drawn filament was obtained by 3.0-fold drawing in 145°C hot air.

In the drawn multifilament obtained in this manner, the number of ethyl branches was 1.5 ethyl branches/1000C, the elongation stress was 0.34 MPa, and a ratio of the number of ethyl branches to the elongation stress was 4.4 ethyl branches/MPa.

As the physical properties of the drawn multifilament, the fineness was 45 dtex, the tensile strength was 39 cN/dtex, the initial elastic modulus was 1214 cN/dtex, and the elongation at break was 3.9%. As the result of the creep measurement, the creep rate was $4.9 \times 10^{-9}$ sec$^{-1}$, the elongation was 1.0% when 24 hours have elapsed since the start of the measurement, the elongation was 1.3% when 96 hours have elapsed since the start of the measurement, a time until the elongation reached 3.0% was 437 hours, and the creep life was not less than 509 hours. As results of the DSC measurement of the fiber sample, the melting point peak temperature in the first temperature rising was 140°C, and the heat amount in the second temperature rising was 130 J/g.

(Example 4)

In this example, a raw polyethylene material as the above-described (ii) containing two or more kinds of ultrahigh molecular weight polyethylenes which were obtained by polymerization of ethylene in the presence of a Ziegler catalyst and had different average molecular weights was used to produce a polyethylene fiber.

Specifically, a drawn multifilament was obtained in the same manner as in Example 1 except that the ultrahigh molecular weight polyethylene (D) having an intrinsic viscosity of 18.0 dL/g and 2.9 ethyl side chains per 1000 carbon atoms using a Ziegler catalyst for polymerization, ultrahigh molecular weight polyethylene (B) having an intrinsic viscosity of 20.0 dL/g and no ethyl side chains using a Ziegler catalyst for polymerization, and decahydronaphthalene (decalin) were mixed at the ultrahigh molecular weight polyethylene (D):the ultrahigh molecular weight polyethylene (B):decalin=6.2:2.8:91.0 (weight ratio) to obtain slurry liquid, the discharged filamentous material being taken from a spinneret was taken up at a speed of 60.0 m/min, the non-drawn multifilament was drawn 1.5-fold while being dried in 110°C hot air, and, furthermore, continuously drawn 3.3-fold in 140°C hot air, to obtain a first drawn filament for which the total draw ratio was 5.0, and the first drawn filament was drawn in 145°C hot air.

In the drawn multifilament obtained in this manner, the number of ethyl branches was 2.0 ethyl branches/1000C, the elongation stress was 0.41 MPa, and a ratio of the number of ethyl branches to the elongation stress was 4.8 ethyl branches/MPa.

As the physical properties of the drawn multifilament, the fineness was 63 dtex, the tensile strength was 35 cN/dtex, the initial elastic modulus was 1048 cN/dtex, and the elongation at break was 4.0%. As the result of the creep measurement, the creep rate was $4.8 \times 10^{-8}$ sec$^{-1}$, the elongation was 2.5% when 24 hours have elapsed since the start of the measurement, the elongation was 4.6% when 96 hours have elapsed since the start of the measurement, a time until the elongation reached 3.0% was 53 hours, and the creep life was not less than 245 hours. As results of the DSC measurement of the fiber sample, the melting point peak temperature in the first temperature rising was 139°C, and the heat amount in the second temperature rising was 123 J/g.

(Example 5)

In this example, a raw polyethylene material as the above-described (i) containing ultrahigh molecular weight polyethylenes which were obtained by polymerization of ethylene in the presence of a Ziegler catalyst and ultrahigh molecular weight polyethylenes which were obtained by polymerization of ethylene in the presence of a metallocene catalyst, or containing two or more kinds of ultrahigh molecular weight polyethylenes which were obtained by polymerization of ethylene in the presence of a Ziegler catalyst and had different average molecular weights was used to produce a polyethylene fiber.

Specifically, a drawn multifilament was obtained in the same manner as in Example 1 except that the ultrahigh molecular weight polyethylene (E) having an intrinsic viscosity of 16.3 dL/g and 7.0 ethyl side chains per 1000 carbon atoms using a metallocene catalyst for polymerization, ultrahigh molecular weight polyethylene (B) having an intrinsic viscosity of 20.0 dL/g and no ethyl side chains using a metallocene catalyst for polymerization, and decahydronaphthalene (decalin) were mixed at the ultrahigh molecular weight polyethylene (E):the ultrahigh molecular weight polyethylene (B):decalin=2.6:6.4:91.0 (weight ratio) to obtain slurry liquid, and the first drawn filament was obtained by 3.5-fold drawing in 145°C hot air.

In the drawn multifilament obtained in this manner, the number of ethyl branches was 2.0 ethyl branches/1000C, the elongation stress was 0.48 MPa, and a ratio of the number of ethyl branches to the elongation stress was 4.2 ethyl branches/MPa.

As the physical properties of the drawn multifilament, the fineness was 40 dtex, the tensile strength was 38 cN/dtex, the initial elastic modulus was 1255 cN/dtex, and the elongation at break was 3.7%. As the result of the creep measurement, the creep rate was $1.1 \times 10^{-9}$ sec$^{-1}$, the elongation was 1.4% when 24 hours have elapsed since the start of the measurement, the elongation was 2.0% when 96 hours have elapsed since the start of the measurement, a time until the elongation reached 3.0% was 233 hours, and the creep life was not less than 509 hours. As results of the DSC measurement of the fiber sample, the melting point peak temperature in the first temperature rising was 140°C, and the heat amount in the second temperature rising was 128 J/g.

(Example 6)

In this example, a raw polyethylene material as the above-described (i) containing ultrahigh molecular weight polyethylenes which were obtained by polymerization of ethylene in the presence of a Ziegler catalyst and ultrahigh molecular weight polyethylenes which were obtained by polymerization of ethylene in the presence of a metallocene catalyst, or containing two or more kinds of ultrahigh molecular weight polyethylenes which were obtained by polymerization of ethylene in the presence of a Ziegler catalyst and had different average molecular weights was used to produce a polyethylene fiber.

Specifically, a drawn multifilament was obtained in the same manner as in Example 1 except that the ultrahigh molecular weight polyethylene (F) having an intrinsic viscosity of 16.3 dL/g and 2.9 alkyl side chains per 1000 carbon atoms using a metallocene catalyst for polymerization, ultrahigh molecular weight polyethylene (B) having an intrinsic viscosity of 20.0 dL/g and no ethyl side chains using a metallocene catalyst for polymerization, and decahydronaphthalene (decalin) were mixed at the ultrahigh molecular weight polyethylene (F):the ultrahigh molecular weight polyethylene (B):decalin=4.7:4.3:91.0 (weight ratio) to obtain slurry liquid, and the first drawn filament was obtained by 2.5-fold drawing in 145°C hot air.

In the drawn multifilament obtained in this manner, the number of ethyl branches was 1.5 ethyl branches/1000C, the elongation stress was 0.36 MPa, and a ratio of the number of ethyl branches to the elongation stress was 4.2 ethyl branches/MPa.

As the physical properties of the drawn multifilament, the fineness was 50 dtex, the tensile strength was 35 cN/dtex, the initial elastic modulus was 989 cN/dtex, and the elongation at break was 4.4%. As the result of the creep measurement, the creep rate was $3.1 \times 10^{-8}$ sec$^{-1}$, the elongation was 2.4% when 24 hours have elapsed since the start of the measurement, the elongation was 3.6% when 96 hours have elapsed since the start of the measurement, a time until the elongation reached 3.0% was 53 hours, and the creep life was 353 hours. As results of the DSC measurement of the fiber sample, the melting point peak temperature in the first temperature rising was 139°C, and the heat amount in the second temperature rising was 121 J/g.

(Example 7)

In this example, a raw polyethylene material as the above-described (i) containing ultrahigh molecular weight polyethylenes which were obtained by polymerization of ethylene in the presence of a Ziegler catalyst and ultrahigh molecular weight polyethylenes which were obtained by polymerization of ethylene in the presence of a metallocene catalyst, or containing two or more kinds of ultrahigh molecular weight polyethylenes which were obtained by polymerization of ethylene in the presence of a Ziegler catalyst and had different average molecular weights was used to produce a polyethylene fiber.

Specifically, a drawn multifilament was obtained in the same manner as in Example 1 except that the ultrahigh molecular weight polyethylene (F) having an intrinsic viscosity of 16.8 dL/g and 2.9 alkyl side chains per 1000 carbon atoms using a metallocene catalyst for polymerization, ultrahigh molecular weight polyethylene (B) having an intrinsic viscosity of 20.0 dL/g and no ethyl side chains using a metallocene catalyst for polymerization, and decahydronaphthalene (decalin) were mixed at the ultrahigh molecular weight polyethylene (F):the ultrahigh molecular weight polyethylene (B):decalin=6.2:2.8:91.0 (weight ratio) to obtain slurry liquid, the discharged filamentous material being taken from a spinneret was taken up at a speed of 100.0 m/min, and the first drawn filament was drawn in 145°C hot air.

In the drawn multifilament obtained in this manner, the number of ethyl branches was 2.0 ethyl branches/1000C, the elongation stress was 0.32 MPa, and a ratio of the number of ethyl branches to the elongation stress was 6.3 ethyl branches/MPa.

As the physical properties of the drawn multifilament, the fineness was 46 dtex, the tensile strength was 33 cN/dtex, the initial elastic modulus was 842 cN/dtex, and the elongation at break was 4.5%. As the result of the creep measurement, the creep rate was $1.2 \times 10^{-8}$ $sec^{-1}$, the elongation was 1.5% when 24 hours have elapsed since the start of the measurement, the elongation was 1.8% when 96 hours have elapsed since the start of the measurement, a time until the elongation reached 3.0% was 353 hours, and the creep life was 389 hours. As results of the DSC measurement of the fiber sample, the melting point peak temperature in the first temperature rising was 139°C, and the heat amount in the second temperature rising was 118 J/g.

(Comparative Example 1)

In the ultrahigh molecular weight polyethylene multifilament of "IZZANAS, grade KS777, manufactured by TOYOBO CO.,LTD", the number of ethyl branches was 0.0 ethyl branches/1000C, the elongation stress was 0.58 MPa, and a ratio of the number of ethyl branches to the elongation stress was 0.0 ethyl branches/MPa. As the physical properties of the multifilament, the fineness was 1775 dtex, the tensile strength was 35 cN/dtex, the initial elastic modulus was 1190 cN/dtex, and the elongation at break was 3.6%.

As the creep resistance, the creep rate was $3.6 \times 10^{-6}$ $sec^{-1}$, a time until the elongation reached 3.0% was 2 hours and the creep life was 17 hours. The elongation after 24 hours elapsed could not be measured since breaks of the multifilament were found when 24 hours have elapsed since the start of the measurement. For the same reason, the elongation after 96 hours elapsed since the start of the measurement could not be measured. Therefore, the creep resistance of Comparative Example 1 was inferior to that of any of the above Examples. As results of the DSC measurement of the fiber sample, the melting point peak temperature in the first temperature rising was 146°C, and the heat amount in the second temperature rising was 146 J/g.

(Comparative Example 2)

A drawn multifilament was obtained in the same manner as in Example 1 except that the ultrahigh molecular weight polyethylene (A) was changed to ultrahigh molecular weight polyethylene (G) having an intrinsic viscosity of 20.0 dL/g and 0.5 ethyl side chains per 1000 carbon atoms using a Ziegler catalyst for polymerization, and the first drawn filament was obtained by 2.8-fold drawing in 148°C hot air.

In the drawn multifilament obtained in this manner, the number of ethyl branches was 0.5 ethyl branches/1000C, the elongation stress was 0.41 MPa, and a ratio of the number of ethyl branches to the elongation stress was 1.2 ethyl branches/MPa.

As the physical properties of the drawn multifilament, the fineness was 48 dtex, the tensile strength was 36 cN/dtex, the initial elastic modulus was 1125 cN/dtex, and the elongation at break was 3.8%.

As the creep resistance, the creep rate was $2.8 \times 10^{-7}$ $sec^{-1}$, the elongation was 4.7% when 24 hours have elapsed since the start of the measurement, the elongation was 13.5% when 96 hours have elapsed since the start of the measurement, a time until the elongation reached 3.0% was 17 hours, and the creep life was 101hours. Therefore, the creep resistance of Comparative Example 1 was inferior to that of any of the above Examples. As results of the DSC measurement of the fiber sample, the melting point peak temperature in the first temperature rising was 142°C, and the heat amount in the second temperature rising was 135 J/g.

# EP 3 971 330 A1

(Comparative Example 3)

A drawn multifilament was obtained in the same manner as in Example 1 except that the ultrahigh molecular weight polyethylene (A) was changed to ultrahigh molecular weight polyethylene (E) having an intrinsic viscosity of 16.3 dL/g and 7.0 ethyl side chains per 1000 carbon atoms using a Ziegler catalyst for polymerization, and the ultrahigh molecular weight polyethylene (A) was changed to ultrahigh molecular weight polyethylene (E) having an intrinsic viscosity of 16.3 dL/g and 7.0 ethyl side chains per 1000 carbon atoms using a Ziegler catalyst for polymerization, ultrahigh molecular weight polyethylene (H) having an intrinsic viscosity of 11.4 dL/g and no ethyl side chains using a Ziegler catalyst for polymerization, and ultrahigh molecular weight polyethylene (E) having an intrinsic viscosity of 16.3 dL/g and 7.0 ethyl side chains per 1000 carbon atoms using a Ziegler catalyst for polymerization, decahydronaphthalene (decalin) were mixed at the ultrahigh molecular weight polyethylene (E):the ultrahigh molecular weight polyethylene (H):decalin=7.7:3:91.0 (weight ratio) to obtain slurry liquid, and the first drawn filament was obtained by 1.5-fold drawing in 140°C hot air.

In the drawn multifilament obtained in this manner, the number of ethyl branches was 6.0 ethyl branches/1000C, the elongation stress was 0.14 MPa, and a ratio of the number of ethyl branches to the elongation stress was 42.9 ethyl branches/MPa.

As the physical properties of the drawn multifilament, the fineness was 89 dtex, the tensile strength was 19 cN/dtex, the initial elastic modulus was 323 cN/dtex, and the elongation at break was 4.6%.

A maximum drawn ratio was 1.5 times when drawn the first drawn filament to the drawn multifilament, and no further increase of the drawn ratio was possible.

The physical properties of the filament of Comparative Example 3 were inferior to that of any of the above Examples, and therefore, no measurements were conducted for the creep resistance and DSC of the fiber sample.

[Table 1]

| | | Unit | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|---|---|
| Raw polyethylene material (A) | Polymerization catalyst | | Ziegler-based | Ziegler-based | Ziegler-based | Ziegler-based | metallocene based | metallocene based | metallocene based | - | Ziegler-based | metallocene based |
| | Intrinsic viscosity | dL/g | 15.6 | 15.6 | 17.0 | 18.0 | 16.3 | 16.8 | 16.8 | - | 20.0 | 16.3 |
| | The number of ethyl branches | The number of ethyl branches/1000 carbon atoms | 3.4 | 3.4 | 2.0 | 2.9 | 7.0 | 2.9 | 2.9 | - | 0.5 | 7.0 |
| Raw polyethylene material (B) | Polymerization catalyst | | - | Ziegler-based | Ziegler-based | Ziegler-based | Ziegler-based | Ziegler-based | Ziegler-based | - | - | Ziegler-based |
| | Intrinsic viscosity | dL/g | - | 20.0 | 20.0 | 20.0 | 20.0 | 20.0 | 20.0 | - | - | 11.4 |
| | The number of ethyl branches | The number of ethyl branches/1000 carbon atoms | - | 0.0 | 0.0 | 0.0 | 0.0 | 0.0 | 0.0 | - | - | 0.0 |
| Difference in intrinsic viscosity (absolute value) | Raw polyethylene material (B)-Raw polyethylene material (A) | dL/g | - | 4.4 | 3.0 | 2.0 | 3.7 | 3.2 | 3.2 | - | - | 4.9 |
| Polyethylene fiber (Drawn multifilament) | Draw ratio from first drawn filament | fold | 2.3 | 2.8 | 3.0 | 2.3 | 3.5 | 2.5 | 2.3 | - | 2.8 | 1.5 |
| | The number of ethyl branches | The number of ethyl branches/1000 carbon atoms | 3.4 | 2.0 | 1.5 | 2.0 | 2.0 | 1.5 | 2.0 | 0 | 0.5 | 6.0 |
| | Elongation stress | MPa | 0.24 | 0.26 | 0.34 | 0.41 | 0.48 | 0.36 | 0.32 | 0.58 | 0.41 | 0.14 |
| | The number of ethyl branches/Elongation stress | The number of ethyl branches per 1000 carbon atoms/MPa | 14.2 | 7.7 | 4.4 | 4.9 | 4.2 | 4.2 | 6.3 | 0.0 | 1.2 | 42.9 |
| | Fineness | dtex | 62 | 47 | 45 | 63 | 40 | 50 | 46 | 1775 | 48 | 89 |
| | Tensile strength | cN/dtex | 33 | 36 | 39 | 35 | 38 | 35 | 33 | 35 | 36 | 19 |
| | Initial elastic modulus | cN/dtex | 796 | 1094 | 1214 | 1048 | 1255 | 989 | 842 | 1190 | 1125 | 323 |
| | Elongation at break | % | 4.7 | 4.1 | 3.9 | 4.0 | 3.7 | 4.4 | 4.5 | 3.6 | 3.8 | 4.6 |
| Creep resistance | Creep rate | sec$^{-1}$ | $7.5\times10^{-10}$ | $8.7\times10^{-9}$ | $4.9\times10^{-9}$ | $4.8\times10^{-8}$ | $1.1\times10^{-9}$ | $3.1\times10^{-8}$ | $1.2\times10^{-8}$ | $3.6\times10^{-6}$ | $2.8\times10^{-7}$ | not evaluated |
| | Elongation when 24 hours have elapsed since start of measurement | % | 1.5 | 1.5 | 1.0 | 2.5 | 1.4 | 2.4 | 1.5 | Measurement was impossible due to breakage | 4.7 | not evaluated |
| | Elongation when 96 hours have elapsed since start of measurement | % | 1.5 | 2.2 | 1.3 | 4.6 | 2.0 | 3.6 | 1.8 | Measurement was impossible due to breakage | 13.5 | not evaluated |
| | Time until elongation reached 3.0% | hour | not less than 509 | 173 | 437 | 53 | 233 | 53 | not less than 353 | 2 | 17 | not evaluated |
| | Creep life | hour | not less than 509 | not less than 509 | not less than 509 | 245 | not less than 509 | 353 | 389 | 17 | 101 | not evaluated |
| DSC | Melting point in first temperature rising | °C | 136 | 139 | 140 | 139 | 140 | 139 | 139 | 146 | 142 | not measured |
| | Heat amount in second temperature rising | J/g | 124 | 123 | 130 | 123 | 128 | 121 | 118 | 146 | 135 | not measured |

EXPLANATION OF REFERENCES

1. a sample
2. a metal plate
3. load

4.  fixed end
5.  a lid

**Claims**

1.  An ultrahigh molecular weight polyethylene fiber containing ethyl branches as side chains wherein, the polyethylene fiber satisfies a ratio of the number of ethyl branches per 1000 carbon atoms ($C_2H_5$/1000C) to an elongation stress of the polyethylene fiber (MPa) {($C_2H_5$/1000C)/ (elongation stress)} of 2 to 30 ethyl branches per 1000 carbon atoms/MPa.

2.  The ultrahigh molecular weight polyethylene fiber according to claim 1, wherein the polyethylene fiber further satisfies all the requirements below in creep measurement at the measurement temperature of 70°C under a measurement load of 6.6 g/dtex:

    a creep rate is not larger than $9.0 \times 10^{-8} \text{sec}^{-1}$;
    an elongation is not larger than 2.7% when 24 hours have elapsed since start of the measurement;
    an elongation is not larger than 5.0% when 96 hours have elapsed since start of the measurement; and
    a time until an elongation reaches 3.0% is not less than 30 hours.

3.  The ultrahigh molecular weight polyethylene fiber according to claim 1 or 2, wherein the polyethylene fiber further satisfies below:
    a number of ethyl branches per 1000 carbon atoms ($C_2H_5$/1000C) is larger than 1.1.

4.  The ultrahigh molecular weight polyethylene fiber according to any one of claims 1 to 3, wherein the polyethylene fiber further satisfies below:

    a melting point peak temperature in a first temperature rising is not higher than 141°C, and
    a heat amount is not larger than 134 J/g in a range from 70°C to 150°C in which the melting point peak temperature is reached in a second temperature rising,
    wherein, the peak temperature in the first temperature rising and the heat amount in the second temperature rising are values obtained when, in the differential scanning calorimetry (DSC measurement), a temperature of the polyethylene fiber is increased from 30°C to 200°C at a rate of 10°C/min (first temperature rising) and the polyethylene fiber is retained at 200°C for five minutes, the temperature is thereafter reduced from 200°C to 30°C at a rate of 10°C/min and the polyethylene fiber is retained at 30°C for five minutes, and the temperature is thereafter increased from 30°C to 200°C at a rate of 10°C/min (second temperature rising).

5.  The ultrahigh molecular weight polyethylene fiber according to any one of claims 1 to 4, wherein the polyethylene fiber further satisfies below:
    a tensile strength is not less than 20 cN/dtex.

6.  A braid, a twisted yarn, a fishing line, a rope, or a net wherein the braid, the twisted yarn, the fishing line, the rope, and the net contains the polyethylene fiber contains the ultrahigh molecular weight polyethylene fiber according to any one of claims 1 to 5.

[Fig.1]

[Fig.2]

## INTERNATIONAL SEARCH REPORT

International application No.

PCT/JP2020/019078

### A. CLASSIFICATION OF SUBJECT MATTER

Int. Cl. D01F6/04(2006.01)i, A01K91/00(2006.01)i, D04C1/02(2006.01)i, D04C1/12(2006.01)i, D07B1/02(2006.01)i
FI: D01F6/04 B, A01K91/00 F, D07B1/02, D04C1/02, D04C1/12
According to International Patent Classification (IPC) or to both national classification and IPC

### B. FIELDS SEARCHED

Minimum documentation searched (classification system followed by classification symbols)
Int. Cl. D01F6/04, A01K91/00, D04C1/02, D04C1/12, D07B1/02

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)
JSTPlus (JDreamIII)

### C. DOCUMENTS CONSIDERED TO BE RELEVANT

| Category* | Citation of document, with indication, where appropriate, of the relevant passages | Relevant to claim No. |
|---|---|---|
| X | WO 2016/002598 A1 (TOYOBO CO., LTD.) 07 January 2016, claims 1-16, example 2 | 1-6 |
| A | JP 6069676 B1 (DSM IP ASSETS B.V.) 01 February 2017, entire text, all drawings | 1-6 |
| P, A | WO 2019/177089 A1 (TOYOBO CO., LTD.) 19 September 2019, entire text, all drawings | 1-6 |

☐ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18.06.2020 | 30.06.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| | | International application No. |
|---|---|---|
| | | PCT/JP2020/019078 |

| Patent Documents referred to in the Report | Publication Date | Patent Family | Publication Date |
|---|---|---|---|
| WO 2016/002598 A1 | 07.01.2016 | CN 106471167 A claims 1-16, example 2 TW 201608069 A | |
| JP 6069676 B1 | 01.02.2017 | US 2014/0106104 A1 entire text, all drawings WO 2012/139934 A1 EP 2697414 A1 CA 2832934 A1 MX 2013011877 A CN 103608501 A KR 10-2014-0022067 A EA 201301155 A CN 106245135 A ES 2644121 T PT 2697414 T LT 2697414 T NO 2697414 T JP 2014-510851 A | |
| WO 2019/177089 A1 | 19.09.2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6047922 B
- JP H06280111 A
- JP 2017102618 A
- JP 6069676 B
- JP 2019091508 A
- JP 2019091509 A
- JP 2019195992 A